# EUROPÄISCHE PATENTSCHRIFT

(11) **EP 0 672 487 B1**
(45) Veröffentlichungstag und Bekanntmachung des Hinweises auf die Patenterteilung: **21.10.1998**
(21) Anmeldenummer: 94104071.9
(22) Anmeldetag: 16.03.1994
(51) Int. Cl.: B22D 11/12, B21D 19/00, B08B 7/02

(54) **Stahlstranggiessanlage mit im Einrichtung zum Entbarten von Strängen oder Strangstücken**
Continuous casting installation for steel with installation for deburring strands or pieces of strands
Installation de coulée continue d'acier avec installation d'ébaburage des lingots ou des pièces des lingots

(43) Veröffentlichungstag der Anmeldung: 20.09.1995
(73) Patentinhaber: HORST K. LOTZ Feuerschutzbaustoffe, D-65719 Hofheim (DE)
(72) Erfinder: Lotz, Horst K., D-65719 Hofheim-Wallau (DE)

(56) Entgegenhaltungen:
- EP-A- 0 064 083
- EP-A- 0 240 130
- EP-A- 0 463 201
- US-A- 3 979 078

## Beschreibung

Die Erfindung betrifft eine Einrichtung zum Entbarten von Strängen gemäß den Merkmalen des Oberbegriffs des Anspruchs 1.

Beim Brennschneiden mit Sauerstoff, insbesondere in Stranggießanlagen, entstehen an den beiden unteren Brennschnittkanten, also am Anfang und am Ende eines jeden abgetrennten Werkstückes, durch die ablaufende und z. T. abkühlende Schneidschlacke mehr oder weniger große Bärte aus einem Gemisch spröder Eisenoxyde und hartem bis elastischem Stahl. Zum Teil hängen diese Bärte tief von den Kanten wie Eiszapfen hinunter, zum Teil bilden sich relativ flache Wulste an den Kanten benachbarter Teile der Werkstückunterflächen, zum Teil gibt es beliebig geformte und beliebig große Zusammensetzungen derselben. Alle sind von der Materialzusammensetzung, der Materialtemperatur und den chemo-physikalischen Arbeitswerten der Schneidgeräte abhängig. In jedem Fall stört die Anwesenheit dieser Bärte sehr bei der Weiterbearbeitung, wenn nicht schon beim Transport.

Die Vermeidung solcher Schneidbärte wäre wünschenswert, ist aber nicht zu verwirklichen. Eine wesentliche Verkleinerung ist je nach Umstand möglich, aber der Bart nicht in seiner Größe verbindlich vorher festlegbar und damit unter Umständen ohne Nacharbeit zuzulassen.

Es gibt daher eine Reihe von Arbeitsweisen und Verfahren, um die Bärte schon möglichst bald nach dem Brennschneiden zu entfernen, und zwar
- durch Abschmelzen, Abbrennen oder Abflämmen mit einem Hand-Sauerstoffbrenner
- durch Abschmelzen, Abbrennen oder Abflämmen mit einer Sauerstoffbrenner-Maschine
- durch Abschlagen bzw. Abmeißeln von Hand
- durch Abschlagen, Abdrücken, Abscheren mit Maschinen, die mit hammerartigen, meißelartigen oder scherblattartigen Werkzeugen bestückt sind.

Während die flämmtechnischen Entbartungsarten vor allem durch hohe Entbartungsgeschwindigkeit Vorteile zeigen, so sind sie durch Rauchgasanfall, Schlackespritzer, Granulierwasserbedarf und Feuer- bzw. Explosionsgefahr erheblich benachteiligt. Daher wendet sich der Bedarf mehr den mechanischen Entbartungsmöglichkeiten zu, bei denen außer dem Aufwand an mechanischen Einrichtungen und Energie nur der erhebliche Zeitaufwand und der Abtransport der abgetrennten Bärte berücksichtigt werden muß. Ein Teil des Zeitaufwandes liegt im Ausrichten von Bart und Entbarter zueinander, auch dadurch, daß der Bart nur von der Werkstückfläche zur Kante hin entfernt werden kann. Ein zweiter Teil des Zeitaufwandes wird für eine langsam fortschreitende, zumeist auch wiederholende, schrittweise Vorgehensweise benötigt. Diese ist bei den konkav oder konvex ausgebildeten Unterflächen z. B. bei stranggegossenen Brammen, erforderlich, um den Bart völlig zu entfernen und nicht nur in der Mitte bei konvexem Querschnitt oder zu den Außenseiten hin bei konkavem Querschnitt. Diese sind, wie auch Schräglagen und Verdrehungen des Werkstückes, Folgen der inneren und äußeren Abkühlungsumstände am Strang.

Der einfachste, bekannte, mechanische Entbarter, von dem die Erfindüng ausgeht, besteht aus einer um eine Drehachse mit einer Scherkante gegen die Unterfläche der Bramme und den bei Bewegung derselben auf sie zufahrenden Bart drückende Scherwippe (EPA 87301501.0). Mit der wippenartigen Ausführung und Drehung werden durch das andrückende Hochdrehen Höhenunterschiede zur Brammenunterfläche hin ausgeglichen; ballige Verformungen der Unterfläche werden vor allem bei flachen Bärten kaum ausgeglichen, der gute Entbartungserfolg ist auf geometrisch ebene Unterflächen begrenzt.

Aufwendiger ist eine Maschine (Anmelder Fa. Interstahl) mit an einem nach oben gedrückten Arm bei gleichzeitigem Vorschub hin und her schlagendem Scherblatt. Dieses schlägt entsprechend seiner Scherblattabmessung Bartstücke schrittweise ab. Die Kragarmausführung von doch beachtlicher Länge und die Zahl und Art der Bewegungen ergeben einen langsamen, wenn auch erfolgreich arbeitenden Entbarter, der natürlich einen hohen Wartungsaufwand und auf einer Werkstückseite einen hohen Platzbedarf hat.

Als dritte erfolgreiche Entbartungsmethode wird durch einen walzenförmigen Entbarter (Anmelder Fa. Plakoma) mit aufgeschweißten Scherringen dargestellt. Bei überlaufender Bramme wird diese Walze hochgedrückt und die nebeneinander und am Walzenkörper verteilt liegenden Scherringen heben die Bramme an und scheren den Bart stückchenweise ab. Dabei kann immer nur ein Scherring auf der Walze arbeiten, bevor nach dem Absetzen des Werkstücks auf der Walze ein erneutes Anheben und Abscheren eines Bartstückes durch den nächsten Scherring erfolgt. Dieses Verfahren ist sehr laut und bedingt eine genaueste Lage des Werkstückes zum Entbarten, wenn es gute Ergebnisse zeitigen soll. Zudem ist es insgesamt sehr zeitaufwendig.

Ein besonders schnelles aber auch lautes Entbarten erfolgt mit am Umfang einer schnell drehenden Walze befestigten Hämmern, die den Bart an der Unterkante des über die Walze laufenden Werkstückes mit hoher Schlagzahl in kleinen Stücken abschlagen. Hoher Verschleiß und erforderlicher Schutz gegen wegfliegende Bart- und Hammerteile sowie gegen Lärm sind neben den Anlagekosten die wesentlichen Nachteile.

Alle vorbeschriebenen Einrichtungen haben zusätzlich den Nachteil der Beschränkung auf einfache Querschnitte, d.h. auf im wesentlichen geradlinige Bärte.

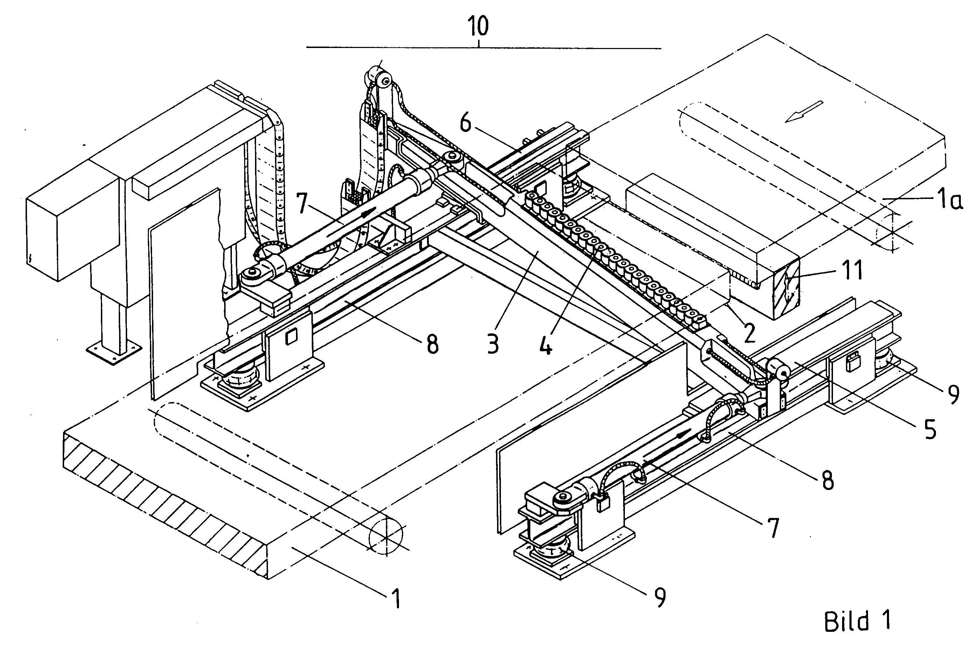

Diesen vorgenannten Verfahren bzw. Maschinen steht eine mechanische Entfernungseinrichtung für Sauerstoffschneidbärte EPA 90 11 20 27.9 gegenüber, die sicherer und vollständiger entbartet, wenig Platz braucht, keinen Lärm verursacht und relativ schnell arbeitet. Eine solche Einrichtung ist in Bild 1 dargestellt und wird da Entbartungsmaschine (10) bezeichnet.
Auf diesem **Bild 1** sieht man unter und vor dem Ende eines Werkstückes (1) (z. B. eine Bramme) mit einem Schneidbart (2) einen schräg angeordneten Scherbalken (3) mit einer Reihe von individuell betätigten Scherkolben (4). Der Scherbalken (3) ruht beidseitig auf Scherschlitten (5), die auf den Schiebebahnen (6) mittels der hydraulischen Scherzylinder (7) zum Entbarten vor und zurückbewegt werden. Alle vorstehenden Teile ruhen auf zwei Hauptrahmen (8) auf beiden Seiten des Werkstücks (1), die jeweils mit zwei Hubzylindern (9) angehoben werden können.
Bei einem Entbarten durch Bewegen des Werkstücks kann auf die Bewegungs-und Antriebsteile Scherschlitten (5), Schiebebahnen (6) und Scherzylinder (7) verzichtet werden. Ein normaler Betriebsablauf mit dieser Entbartungsmaschine (10) geht wie folgt vor sich:
Die Werkstücke (1 bzw. 1a) fahren über bzw. zurück vor den Scherbalken (3) in den Arbeitsbereich der Entbartungsmaschine (10), gegebenenfalls mit Unterstützung eines heb-und senkbaren Anschlages (11). Die Hubzylinder (9) heben über die Hauptrahmen (8), Scherschlitten (5), Schiebebahnen (6) den Scherbalken (3) in eine Arbeitsstellung knapp unter das Werkstück (1). Dann werden die Scherkolben (4) einzeln mit ihren Andrückzylindern nach oben gegen die mehr oder weniger ebene Unterfläche des Werkstücks (1) in Nähe des Schneidbartes (2) gedrückt. Nun drücken die Scherzylinder (7) den leicht schräg zum Schneidbart (2) liegenden Scherbalken (3) mit seinen Scherkolben (4) einen nach dem andern gegen den Schneidbart (2) und schert diesen ab. Die nach diesem Vorgang hinter dem Werkstück (1) hoch springenden Scherkolben (4) werden in den doppelt wirkenden Andrückzylindern (12) wieder runtergezogen. Der Scherbalken (3) wird nun unter das Ende eines zweiten Werkstückes (1a) geschoben, die Scherkolben (4) werden wieder einzeln nach oben angedrückt und ein Schervorgang in entgegengesetzter Richtung durchgeführt. Danach senken die Scherkolben (4) und der Scherbalken (3) jeweils wieder ab und die Werkstücke (1 und 1a) fahren ab, bzw. in eine neue Arbeitsstellung.

Diese Entbartungsmaschine (10) arbeitet zuverlässig und erfolgreich, ist jedoch schwer und aufwendig, wie auch nicht besonders leicht zu warten; der Austausch der Scherkolben (4) ist schwierig und zeitraubend. Weiterhin sind Bärte an Längsteilschnitten oder nicht einfachen Querschnittsflächen nicht oder nur sehr umständlich entfernbar.

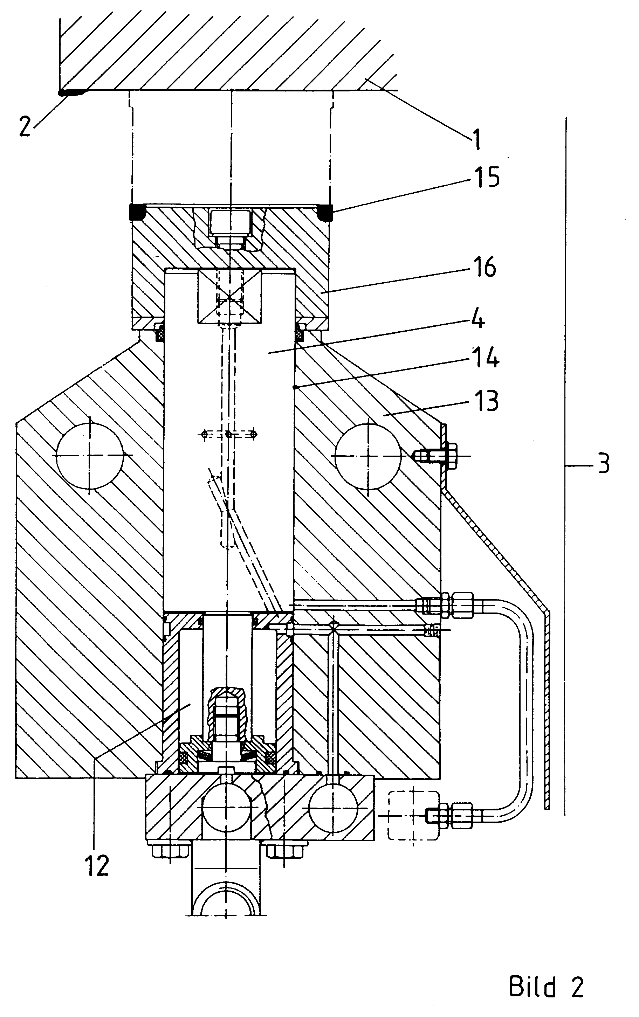

In **Bild 2** ist der Querschnitt eines bisherigen Scherbalkens (3) vorstehend beschriebenen Entbartungsmaschine (10) zum besseren Verständnis der nachstehend beschriebenen Erfindung dargestellt und wird hiermit erläutert. Das Scherbalkengehäuse (13) aus allseitig bearbeitetem Vollmaterial ist mit entsprechend vielen Führungsbohrungen (14) mit dem Andrückzylinder (12) versehen, in denen Scherkolben (4) mit ihren aufgeschraubten Scherkappen (16) einzeln versorgt auf- und ab bewegt werden können. Dabei muß der Druck der Preßluft im Andrückzylinder (12) so groß sein, daß die hochfeste Scherkante (15) der Scherkappe (16) mit ihrer Oberfläche von ca. 20 cm² so fest gegen die Unterfläche eines Werkstückes (1) gedrückt wird, damit sie nicht beim Entbarten über einen flachen, festen Schneidbart (2) rutscht.

Durch vorgenannten hohen Druck entsteht beim Entbarten eine der Entbartungsbewegung entgegenwirkende Reibung zwischen Oberfläche der Scherkante (15) und Unterfläche des Werkstückes (1), die sich zur eigentlich erforderlichen Scherkraft hinzufügt und die Flächenpressung zwischen Scherkolben (4) und Führungsbohrung (14) auch mit den erkennbar schlechten Hebelverhältnissen erheblich erhöht und die Führungsbohrung (14) verformt oder sehr start verschleißt. Dagegen sind die Länge des Scherkolbens (4) zu vergrößern und austauschbare, hochfeste Führungsbuchsen (nicht dargestellt) einzusetzen.

Noch kritischer wird diese Situation dann, wenn die Scherkante (15) auf den flachen Schneidbart (2) aufläuft, dieser mit einem sehr ungünstig kleinen Keilwinkel die Scherkraft in eine der Andrückkraft entgegenwirkenden, große Senkrechtkraft verwandelt. Dagegen wiederum muß die Andrückkraft von vorn herein sehr groß bemessen werden, um ein sicheres Entbarten bei sich verschleißender Scherkante (15) zu ermöglichen. Damit werden auch die Scherkraft und die Flächenpressungen am Scherkolben (4) wieder unerwünscht größer. Die Gefahr des Auflaufens der Scherkante (15) auf den Schneidbart (2) ist vor allem auch dann gegeben, wenn die ebene Ringfläche der Scherkante (15) auf rückspringende oder vorragende Formen des Werkstückes (1) vor dem Schneidbart (2) aufdrücken und dieser dann in die verbleibenden Lücken daneben keilförmig hineinrutschen kann.

Während die Lage der Werkstücke zum Entbarten bei dieser Entbartungsmaschine (10) je nach geplantem Scherweg weniger genau sein muß, erfordern aber die leichten Werkstücke (1) Niederhalter beim Entbarten der normalerweise sich unten befindlichen Schneidbärte. Auch sind die großen Anpreßkräfte zum Entbarten wegen Verschleiß und Bemessung, besonders aber auch beim schnellen Entbarten sehr nachteilig. Die Betriebssicherheit bei vielen einzeln versorgten und gesteuerten Entbartungszylindern gilt es auch zu verbessern, ebenso die vereinfachte Wartung durch leichten Scherkolbenaustausch von einer Seite aus und die bessere Ausnutzung des Scherkantenumfanges des Scherkolbens (3). Die Entbartungsmaschine (10) ist daher weiter zu entwickeln bezüglich Anwendungsmöglichkeiten, Aufwand für die Entbartungsmaschine selbst und für ihre Nebeneinrichtungen, verbesserte Wartung und einfacheren Betrieb.

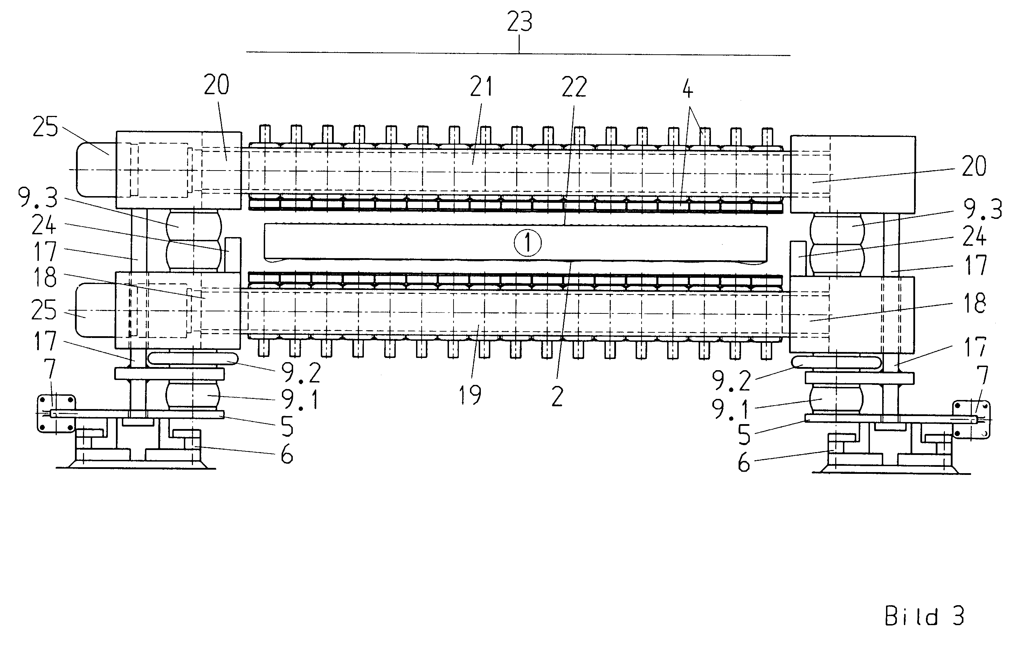

Die am 10.03.94 beschriebene und eingereichte Erfindung von uns besteht beispielsweise gemäß den aufgeführten Ansprüchen nach **Bild 3** aus einer einseitigen oder zweiseitigen Schiebebahn (6) mit durch Scherzylinder (7) in Achse des Werkstückes (1) bewegbarem Scherschlitten (5), die über luftbetätigte Hubzylinder (9.1) begrenzt höhenverstellbare Hubrahmen (17) tragen. In diesen sind auf weiteren Hubzylindern (9.2) die Drehlager (18) für den unteren Kolbenkörper (19) angeordnet, während die Drehlager (20) für den oberen Kolbenkörper (21) am oberen Teil des Hubrahmens (17) sitzen. Zwischen den verschiebbaren Drehlagern (18) des unteren Kolbenkörpers (19) und dem oberen Kolbenkörper (21) sitzen weitere Hubzylinder (9.3), die zusammen mit den Hubzylindern (9.1) zwischen Scherschlitten (5) und unterem Hubrahmen (17) die Kolbenkörper (19 und 21) auseinander und den Hubrahmen (17) nach oben in Ausgangsstellung fahren. Ist ein Werkstück (1) an seinem Ende unten mit Schneidbart (2) und oben mit Schneidperlen (22) behaftet, in den zur Unterscheidung nun so genannten Entbarter (23) eingefahren, dann drücken die Hubzylinder (9.2) im Hubrahmen (17) unter den Drehlagern (18) des unteren Kolbenträgers (19) diesen nach oben gegen die Unterfläche des Werkstücks (1) zum Entbarten und gleichzeitig den Hubrahmen (17) mit dem oberen Kolbenkörper (21) nach unten auf die Oberfläche des Werkstücks (1) zum Entperlen durch Bewegung der Scherschlitten (5) mit den hydraulischen Scherzylindern (7). Sollte das Werkstück (1) aus Transportgründen umgedreht, d.h. mit dem Schneidbart (2) nach oben und den Schneidperlen (22) in den Entbarter (23) kommen, so kann auch so sicher entbartet und entperlt werden. Auf jeden Fall entfällt bei diesem Entbarter (23) ein Niederhalter, sollte der Anpreßdruck von unten höher als das anteilige Brammengewicht sein. Daher ist ein zweiter Kolbenkörper (21), gegebenenfalls mit Gleitkappen, Gleitschuhen, Rollen oder selbst als Niederhalterrolle (21) ausgeführt, vorteilhaft bei leichten Werkstücken (1) vorzusehen.

Zwischen unterem und oberem Drehlager (19, 21) sind Dickensteine (24) eingesetzt, um eine kleinste Durchgangsöffnung für das Werkstück (1) gegen die Hubzylinder (9) zu bestimmen. Damit wirkt beim Entbarten nur der Druck in den Kolbenkörpern (19, 21) auf die Scherkolben (4).

Auf den Drehlagern (18 bzw. 20) sitzt ein Drehantrieb (25) bzw. Drehanschlag (26) zum Einstellen oder zur Begrenzung eines Einstellwinkels zwischen Scherkolben (4) und Werkstück (1). Der Antrieb kann auch zum Drehen der Kolbenkörper (19 bzw. 21) in eine Reparatur- oder Reinigungsstellung dienen.

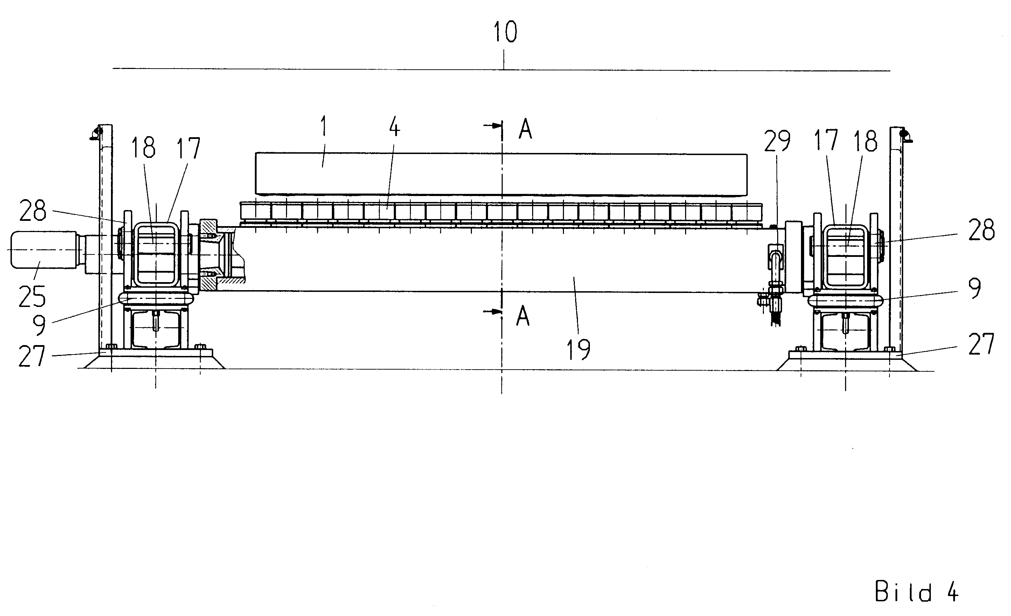

Im **Bild 4** ist eine Ansicht eines vereinfachten Entbarters (23), nämlich nur aus beidseitigen Drehlagern (18) in beidseitigen Hubrahmen (17) über 4 Hubzylinder (9) hebbar auf den Grundplatten (27) mit Hubführungen (28) für den Kolbenkörper (19) bestehend, dargestellt. Dieser Entbarter (23) entbartet im Stillstand mit von unten gegen ein Werkstück (1) angepreßten Scherkolben (4), wenn das Werkstück (1) über den Kolbenkörper (19) hinweggezogen wird. Über die Luftleitung (29) wird der ganze Kolbenkörper (19) unter Druck gesetzt und alle Kolben (4) zusammen ausgefahren.

Wichtig dabei ist, daß erfindungsgemäß alle Scherkolben (4) mit geringerem Luftdruck ausgefahren sind oder werden und sich beim Anheben des Kolbenkörpers (19) durch die Hubzylinder (9) vor jedem Schervorgang an die Unterfläche des Werkstücks (1) der Form der Unterfläche folgend anlegen.

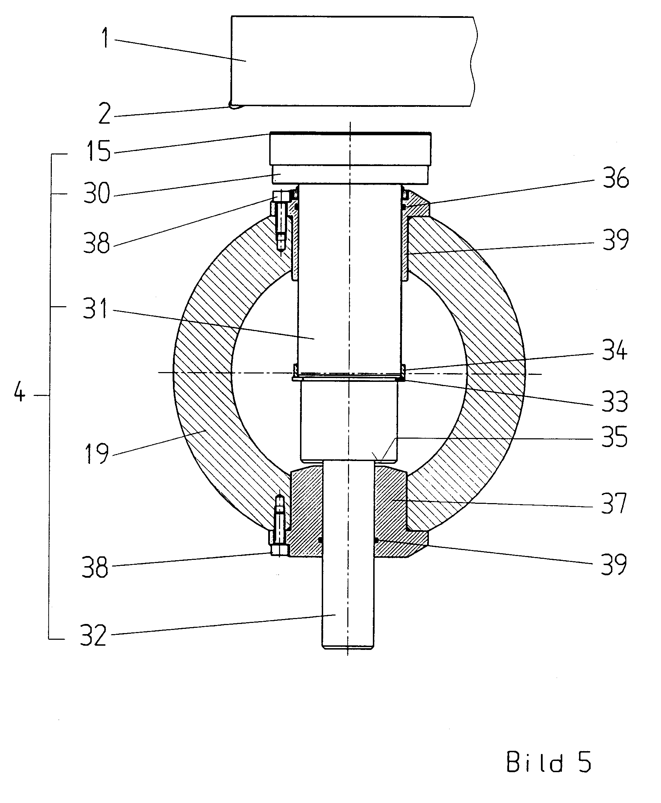

Aus dem **Bild 5** ist erkennbar, daß der erfindungsgemäße Kolbenkörper (19), dem früheren Scherbalken (3) entsprechend, nun aus einem an sich unbearbeiteten, dickwandigen Rohr besteht, das als unbearbeiteter Zylinderraum für abgesetzte Scherkolben (4) wirkt. Dazu ist der Scherkolben (4) einteilig aus Scherkopf (30) mit Scherkante (15), Arbeitskolben (31) und Kolbenschaft (32) bestehend hergestellt und mit einem von einem Sprengring (33) gehaltenen Pufferring (34) aus elastischem Material gegen ein Hinausschieben versehen. Die Unterschiedsfläche zwischen Arbeitskolben (31) und Kolbenschaft (32) stellt die wirksame Druckfläche (35) zum Andrücken des Scherkopfes (30) gegen die Unterfläche des Werkstücks (1) dar.

Geführt wird der Scherkolben (4) in der oberen Kolbenbuchse (36) und der unteren Kolbenbuchse (37), die mit Innensechskantschrauben (38) in gleich großen Durchgangsbohrungen des Kolbenkörpers (19) befestigt sind. Dichtringe (39) in den Kolbenbuchsen (36, 37), die auch in Ringnuten am Arbeitskolben (31) oder am Kolbenschaft (32) angeordnet sein können, dichten den mit Druckluft gefüllten Innenraum des Kolbenkörpers (19) gegen Druckverlust am hin- und her gehenden Scherkolben ab. Die Durchmesser der verschiedenen Bauteile im Scherkolbenbereich sind so gewählt, daß der Scherkolben (4) am Scherkopf (30), also von einer Seite aus, ganz herausgezogen werden kann, wobei höchstens die obere Kolbenbuchse (36) gelöst und mit herausgezogen wird.

Der in unserer Schutzrechtsanmeldung vom 10.03.94 beschriebene Entbarter mit pneumatisch oder hydraulisch aus einem Kolbenkörper heraus und mit bestimmtem Winkel gegen die Unterfläche des zu entbartenden Werkstücks gedrückte Scherkolben läßt sich bei entsprechender Konstruktion, wie in den Bildern 3, 4 und 5 erkennbar, für flache und runde, ja sogar für mit anderen Querschnitten erzeugte Werkstücke (1) gut einsetzen. Seine ruhige Arbeitsweise und Vielseitigkeit sind soweit unübertroffen.

Bei Platzmangel, schnellem Produktionsfluß und hoher Produktionsleistung ,z. B. für längsgeteilte Werkstücke (1), wird die nachstehend beschriebene Erfindung einer zur Unterscheidung ***Exbarter*** genannten Entbartungsmaschine eine zwar mehr Lärm und Staub erzeugende, aber kostengünstige Lösung der Entbartungsaufgabe bei flachen Werkstücken sein.

Die Grundlagen des Exbarters sind ***exzentrisch*** um eine schnell drehende Welle herumgeschleuderte Scheiben, die gegenüber dieser exzentrisch schrittweise vor und zurück, also nockenwellenartig abgesetzten Welle, mit zu großen Innenbohrungen versehen sind.

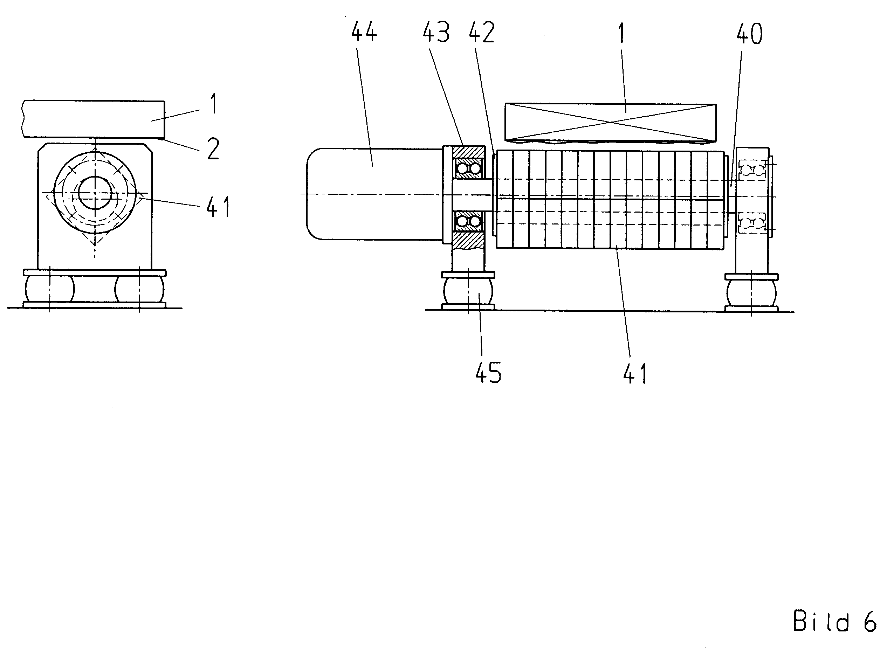

In **Bild 6** ist der erfindungsgemäße Aufbau eines Exbarters zu erkennen.

Auf eine unter dem Werkstück (1) in beidseitigen Lagern (43) angeordnete Schlagwelle (40) sind Schlagscheiben (41) mit gewollt zu großen Innenbohrungen zwischen zwei Bundscheiben (42) angefädelt, die bei schnellen Umdrehungen, bewirkt durch den Antrieb (44) und eine mitnehmende Reibung, zwischen der Schlagwelle (40) und den Schlagscheiben (41) herumgeschleudert werden. Ist der Abstand zwischen dem Schneidbart (2) bzw. der Unterfläche des Werkstücks (1) kleiner als der Unterschied zwischen dem Durchmesser der Schlagwelle (40) und dem Innendurchmesser der Schlagscheibe (41), dann muß die Schlagscheibe (41) gegen die Unterfläche des Werkstücks (1) schlagen, gleitet an letzterer in Drehrichtung auf den Schneidbart (2) zu entlang oder fällt herunter, um dann erneut wieder mitgenommen zu werden. Bei einer hohen Drehzahl kommt es zu vielen solcher Schläge, die beim Verschieben des Werkstücks (1) auch den Schneidbart erreichen und diesen, je nach Größe, Festigkeit, Zusammensetzung und Temperatur, in mehr oder minder kleinen Stücken abschlagen. Wichtig erscheint, daß die Drehrichtung = Schlagrichtung immer von unter der Unterfläche des Werkstücks (1) her gegen den Schneidbart (2) gerichtet ist, gleichgültig in welche Richtung das Werkstück (1) oder der Exbarter (40-44) verschoben werden.

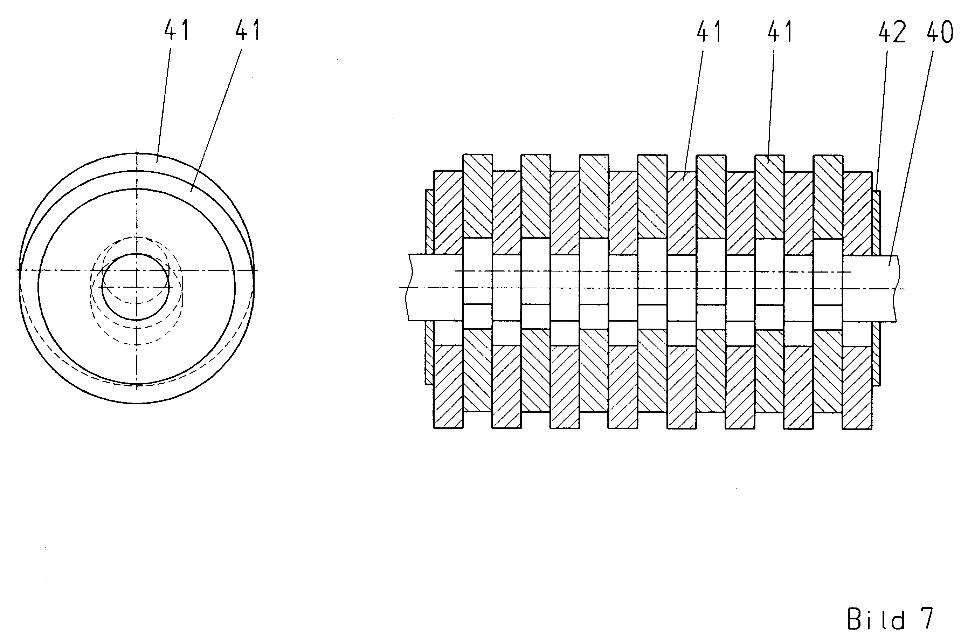

Um die Schleuderwirkung zu sichern, das heißt, um von der Reibung zwischen der Schlagwelle (40) und den Schlagscheiben (41) unabhängiger zu werden, wird, wie in **Bild 7** dargestellt, die Schlagwelle (40) mit exzentrischen Absätzen versehen, so daß sie wie eine Kurbel- oder Nockenwelle die Schlagscheiben (41) herumwirbelt.

Um aus Sicherheitsgründen außerhalb des Entbartungsbetriebes den ganzen Entbarter absenken zu können und um unerwünschte Schwungkräfte aufzunehmen, wird derselbe auf pneumatische Hubelemente (45) gesetzt.

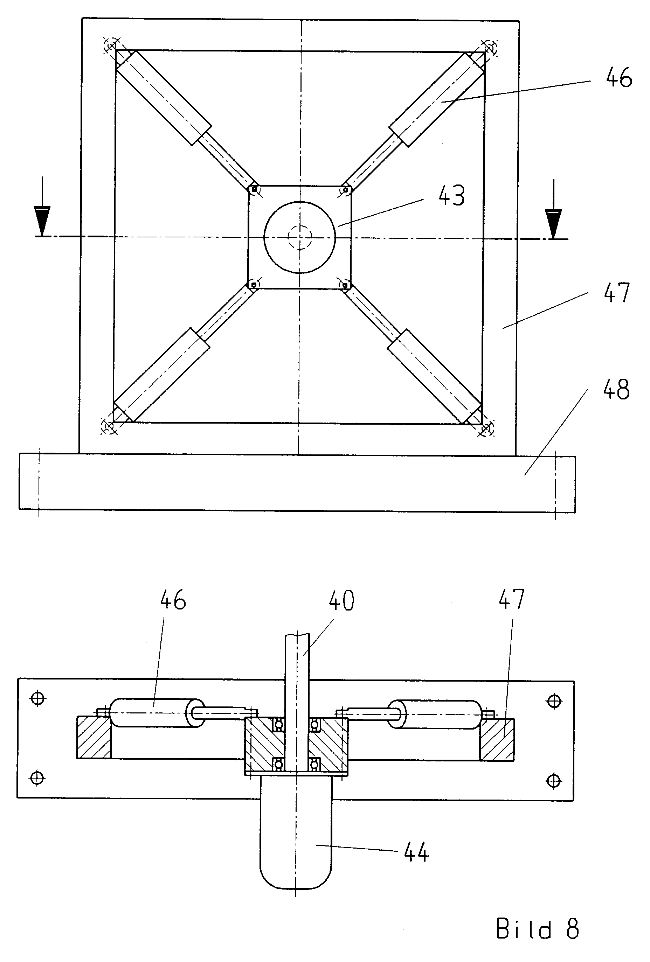

Sollten durch hohe Massen der Schlagscheiben (41) und durch hohe Drehzahl der Schlagwelle (40) die Schwungkräfte ungleichmäßiger und größer sein, so läßt sich eine Aufhängung der Lager (43) an Stoßdämpfern (46) in einem Lagerrahmen (47) auf einer Grundplatte (48) denken, so wie dies in **Bild 8** dargestellt ist.

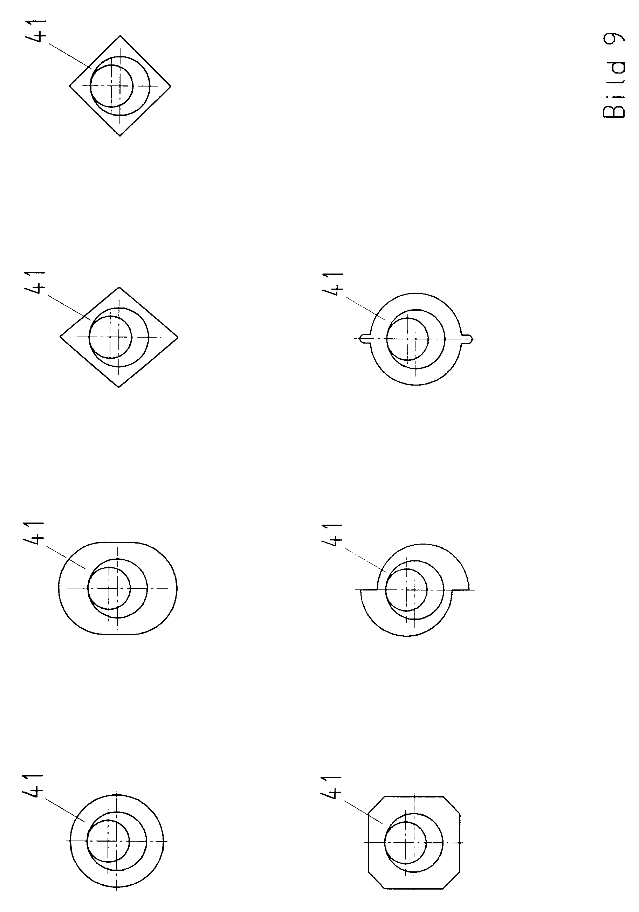

In **Bild 9** sind mögliche Formen der Schlagscheibe (41) zu sehen, die vom Kreis über Oval, Raute, Quadrat, Vielkant bis zu Sonderformen mit Schlagkanten und Schlagnoppen reicht.

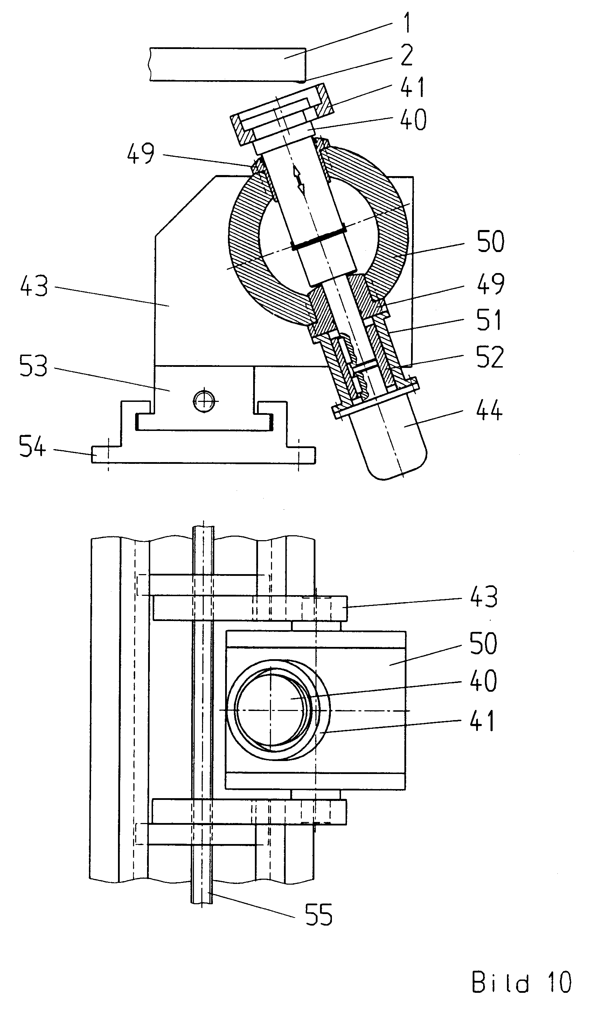

Natürlich läßt sich erfindungsgemäß, wie in **Bild 10** dargestellt, eine Schlagwelle (40) mit einer Schlagscheibe (41) auch senkrecht oder nahezu senkrecht unter dem Werkstück entbartend, das heißt exzentrisch schleudernd, arbeiten. Dazu ist die Schlagwelle (40) abgesetzt und in einem mit Luft höheren Drucks gefüllten Schlagwellenkörper (50) in zwei mit Dichtringen versehenen Buchsen (49) geführt, hat am hinteren Ende in einer Laterne (51) eine Schiebekupplung (52) zur verschiebenden Übertragung von Drehkräften von einem Antrieb (44). Dabei drückt der Absatz die Schlagwelle (40) durch den Luftdruck nach oben und der Antrieb (44) bringt die Schlagscheibe (41) am oberen Ende zum exzentrischen Schlagen, während mittels der Lager (43) der Schlagwellenkörper (50) gegen einen nicht dargestellten Anschlag in einen geeigneten, kleinen Winkel zur Unterfläche des Werkstücks (1) gebracht wird. Zum Entbarten wird nun die schleudernde Schlagscheibe (41) mittels des die Lager (43) tragenden Schlitten (53) durch den Schlittenantrieb (55) in Form einer Spindel in einer Schlittenführung (54) parallel zum Schneidbart (2) verschoben.

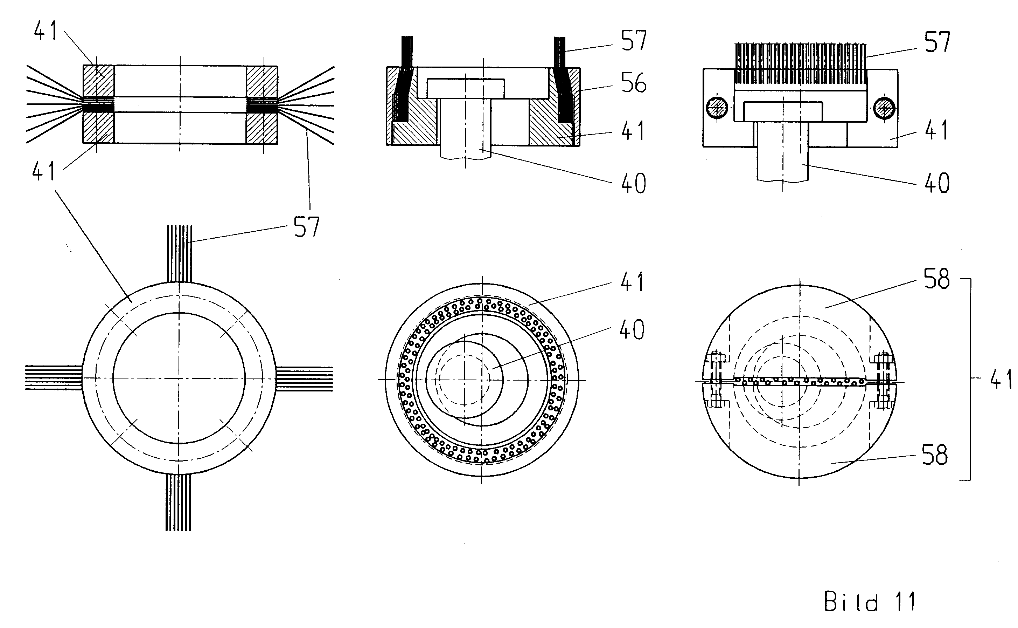

So wie hier jede oben genannte Form von Schlagscheibe (41) eingesetzt werden kann, ist es, wie auch bei den Schlagscheiben (41) mit horizontaler Achse möglich, die Schlagscheibe (41), wie **Bild 11** zeigt, als Bürste mit Klemmring (56) und Federdrähten (57) oder mit Klemmbacken (58) und Federdrähten (57) auszubilden. Diese Ausführung müßte bei geringeren Massen höhere Geschwindigkeiten zugrunde legen, hat aber möglicherweise Vorteile bei kleinen Bärten und bei den Verschleißteilkosten.

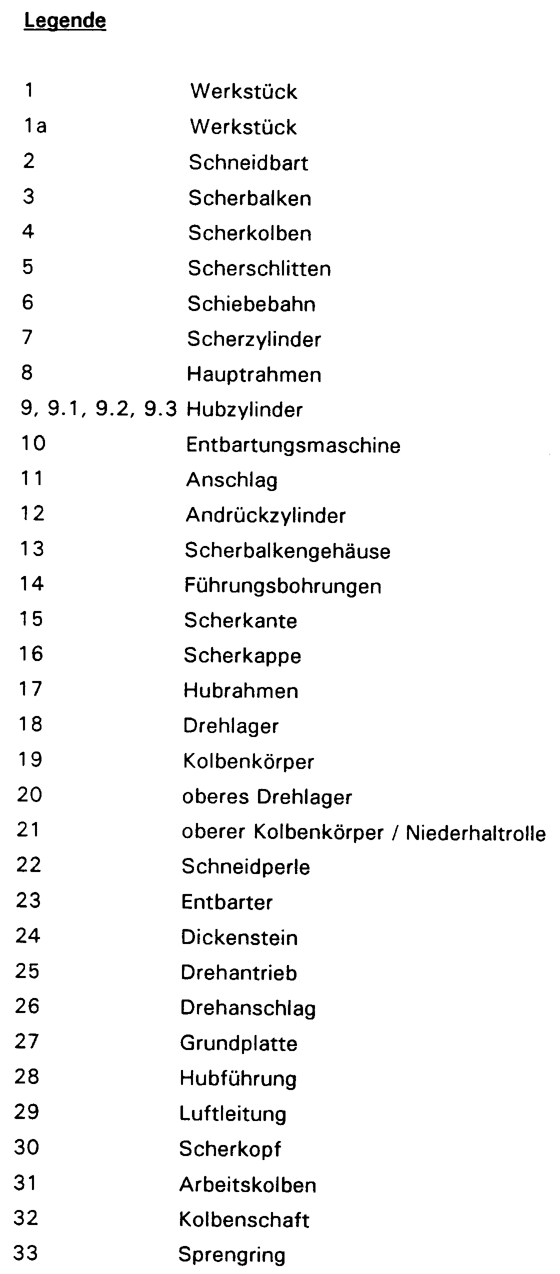

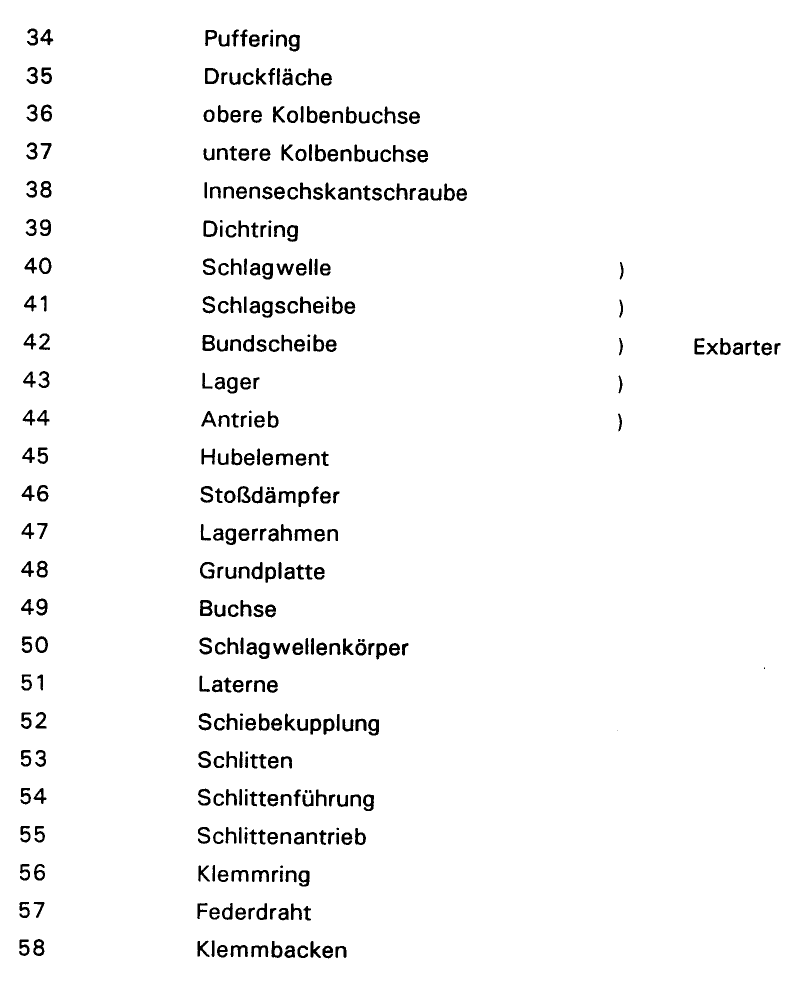

## Patentansprüche

1. Einrichtung zum Entbarten von beim thermochemischen Unterteilen der Stränge oder Strangstücke entstandenen Brennschneidbärten, die im Fluß einer Stahlstranggießanlage oder nachgeschaltet arbeitet, dadurch gekennzeichnet, daß an einer vorzugsweise nockenwellenartig abgesetzten, von einem Antrieb (44) mit hoher Drehzahl gedrehten, waagerechten oder senkrechten Schlagwelle (40) eine der Strangbreite entsprechende Anzahl von Schlagscheiben (41) mit Innenbohrung, die wesentlich größer sind als der Außendurchmesser der Schlagwelle (40), angeordnet sind, und daß der Unterschied zwischen diesen Durchmessern größer ist als der Abstand zwischen der Unterfläche des zu entbartenden Werkstückes (1) oder des Schneidbartes (2) und den Schlagscheiben (41) in Ruhelage.

2. Einrichtung zum Entbarten von beim thermochemischen Unterteilen der Stränge oder Strangstücke entstandenen Brennschneidbärten, die im Fluß einer Stahlstranggießanlage oder nachgeschaltet arbeitet, nach Anspruch 1, dadurch gekennzeichnet, daß die Schlagscheiben (41) ringförmig eine runde, ovale, rautenartige, quadratische, vieleckige mit Schlagflächen, abnehmbaren Schlagnoppen und Schlagbürsten versehene Außenform am Außenmantel oder an der freien Stirnfläche aufweisen.

3. Einrichtung zum Entbarten von beim thermochemischen Unterteilen der Stränge oder Strangstücke entstandenen Brennschneidbärten, die im Fluß einer Stahlstranggießanlage oder nachgeschaltet arbeitet, nach einem der Ansprüche 1 und 2, dadurch gekennzeichnet, daß die Lager (43) zum Anpassen an die Lage der Unterfläche des Werkstückes (1) auf pneumatischen oder hydraulischen Hubelementen angeordnet sind.

4. Einrichtung zum Entbarten von beim thermochemischen Unterteilen der Stränge oder Strangstücke entstandenen Brennschneidbärten, die im Fluß einer Stahlstranggießanlage oder nachgeschaltet arbeitet, nach einem der Ansprüche 1 bis 3, dadurch gekennzeichnet, daß die Lager (43) der Schlagwelle (40) an an sich bekannten, in Anordnung und Anzahl rundum wirksamen Stoßdämpfern aufgehängt sind.

5. Einrichtung zum Entbarten von beim thermochemischen Unterteilen der Stränge oder Strangstücke entstandenen Brennschneidbärten, die im Fluß einer Stahlstranggießanlage oder nachgeschaltet arbeitet, nach einem der Ansprüche 1 bis 4, dadurch gekennzeichnet, daß die exzentrisch versetzten Absätze an der Schlagwelle (40) zum Schleudern der Schlagscheiben (41) durch hohe Reibung zwischen den beiden ersetzt wird.

6. Einrichtung zum Entbarten von beim thermochemischen Unterteilen der Stränge oder Strangstücke entstandenen Brennschneidbärten, die im Fluß einer Stahlstranggießanlage oder nachgeschaltet arbeitet, nach einem der Ansprüche 1 bis 5, dadurch gekennzeichnet, daß die Schlagwelle (40) mit Schlagscheibe (41) zum Anheben als abgesetzte Welle durch einen unter Luftdruck stehenden, schwenkbaren Schlagwellenkörper (50) hindurchgeht und an dessen anderer Seite über eine Schiebekupplung (52) mit einem Antrieb (44) verbunden ist.

## Claims

1. Continuous steel casting plant with in- or off-line device to deburr oxy-gas cutting beards developed during the thermochemical subdividing of strands or strand pieces defined by a sufficient number of knocking discs (41) arranged on a horizontal or vertical camshaft type - partly off center-knocking shaft (40) - the knocking discs with center bores much bigger than the outer diameter of the knocking shaft (40); both rotated with a high number of rotations by drive (44); with a difference between these diameters bigger than the distance between the lower surface of the work piece (1) or the cutting beard (2) and the knocking disc (41) in home position.

2. Continuous steel casting plant with in- or off-line device to deburr oxy-gas cutting beards developed during the thermochemical subdividing of strands or strand pieces as per claim 1, defined by that the outer form of the knocking discs (41) is round, oval, square, rhombic, multi-cornered having knocking faces, exchangeable knocking burls or knocking brushes on the ring face or on the free front face.

3. Continuous steel casting plant with in- or off-line device to deburr oxy-gas cutting beards developed during the thermochemical subdividing of strands or strand pieces as per one of the claims 1 and 2, defined by arranging the bearings (43) of the knocking shaft (40) on pneumatic or hydraulic lifting elements to suit to the level of the lower surface of the work piece (1).

4. Continuous steel casting plant with in- or off-line device to deburr oxy-gas cutting beards developed during the thermochemical subdividing of strands or strand pieces as per one of the claims 1 to 3, defined by supporting the bearings (43) of the knocking shaft (40) by standard shock absorbers, effective in numbers and around the bearings.

5. Continuous steel casting plant with in- or off-line device to deburr oxy-gas cutting beards developed during the thermochemical subdividing of strands or strand pieces as per one of the claims 1 to 4, defined by that the off-center design of the knocking shaft (40) to hurl the knocking discs (41) is replaced by high friction between these two.

6. Continuous steel casting plant with in- or off-line device to deburr oxy-gas cutting beards developed during the thermochemical subdividing of strands or strand pieces as per one of the claims 1 to 5, defined by that the knocking shaft (40) with knocking discs (41) is passing through an air pressurized, swiveling knocking shaft body (50) to lift due to an inside reduced knocking shaft (40) diameter and being connected on the outside to a drive (44) via a shifting clutch (52).

## Revendications

1. Installation de coulée continue d'acier avec installation d'ébavurage des lingots ou des pièces des lingots, installée en ligne ou en sortie de ligne dans une installation de coulée continue d'acier, caractérisée en ce que des disques de frappe (41) d'un nombre correspondant à la largeur de la coulée sont rapportés sur un arbre de frappe (40) horizontal ou vertical, se présentant de préférence sous la forme d'un arbre à came et tournant à grande vitesse sous l'action d'un entraînement (44), que l'alésage central de ces disques de frappe est d'un diamètre bien supérieur à celui de l'arbre de frappe et que la différence entre ces deux diamètres est supérieure à la distance séparant la face inférieure de la pièce d'oeuvre à ébavurer (1) resp. la bavure (2) et les disques de frappe en position de repos.

2. Installation de coulée continue d'acier avec installation d'ébavurage des lingots ou des pièces des lingots selon la revendication 1, caractérisée en ce que les disques de frappe (41) présentent un profit extérieur rond, oval, en losange, carré ou polygonal et sont pourvus de surfaces de frappe, d'ergots de frappe démontables ou de brosses de frappe montés sur le manteau extérieur ou la face frontale libre.

3. Installation de coulée continue d'acier avec installation d'ébavurage des lingots ou des pièces des lingots selon l'une des revendications 1 et 2, caractérisée en ce que les paliers (43) sont installés sur des éléments de levée pneumatiques ou hydrauliques pour s'adapter à la position de la face inférieure de la pièce d'oeuvre (1).

4. Installation de coulée continue d'acier avec installation d'ébavurage des lingots ou des pièces des lingots selon l'une des revendications 1 à 3, caractérisée en ce que les paliers (43) de l'arbre de frappe (40) sont maintenus par des amortisseurs classiques qui assurent de par leur arrangement et leur nombre une suspension efficace de l'ensemble.

5. Installation de coulée continue d'acier avec installation d'ébavurage des lingots ou des pièces des lingots selon l'une des revendications 1 à 4, caractérisée en ce que les décalages excentriques de l'arbre de frappe (40) prévus pour lancer les disques de frappe (41) sont remplacés par une friction élevée entre les deux éléments.

6. Installation de coulée continue d'acier avec installation d'ébavurage des lingots ou des pièces des lingots selon l'une des revendications 1 à 5, caractérisée en ce que l'arbre de frappe (40) pourvu d'un côté d'un disque de frappe (41) est monté dans un corps de frappe (50) pivotable qui assure la levée de l'arbre par air comprimé et que l'arbre de frappe est associé de l'autre côté à un entraînement (44) au moyen d'un accouplement coulissant (52).
